# EUROPÄISCHE PATENTSCHRIFT

(11) **EP 1 796 509 B1**
(45) Veröffentlichungstag und Bekanntmachung des Hinweises auf die Patenterteilung: **20.08.2008**
(21) Anmeldenummer: 05786275.7
(22) Anmeldetag: 16.09.2005
(51) Int. Cl.: A47B 31/02, A47J 39/00

(54) **REGENERIERVORRICHTUNG**
REGENERATING DEVICE
DISPOSITIF DE REGENERATION

(30) Priorität: 24.09.2004 DE 102004047569
(43) Veröffentlichungstag der Anmeldung: 20.06.2007
(73) Patentinhaber: BLANCO CS GmbH + Co KG, 75038 Oberderdingen (DE)
(72) Erfinder: KONRAD, Claus, 75236 Kämpfelbach (DE); KÜBLER, Dietmar, 75038 Oberderdingen (DE); OBREITER, Gerd, 75196 Remchingen (DE); BÖSS, Ralf, 76703 Kraichtal (DE)
(74) Vertreter: Hoeger, Stellrecht & Partner Patentanwälte
(86) Internationale Anmeldenummer: PCT/EP2005/009970
(87) Internationale Veröffentlichungsnummer: WO 2006/032408

(56) Entgegenhaltungen:
- WO-A-03/013326
- DE-A1- 2 228 784
- FR-A- 2 724 547
- US-A- 2 845 780
- US-A- 2 948 798

## Beschreibung

Die vorliegende Erfindung betrifft eine Kombination aus einer Regeneriervorrichtung, d.h. einer Vorrichtung zum Erwärmen, Warmhalten, Kühlen und/oder Kalthalten von Speisen und/oder Getränken, welche mindestens ein Kaltfach zur Aufnahme zu kühlender oder kaltzuhaltender Speisen und/oder Getränke und/oder mindestens ein Heißfach zur Aufnahme zu erwärmender oder warmzuhaltender Speisen und/oder Getränke umfasst, und einem in die Regeneriervorrichtung einbringbaren Speisenbehälter.

Solche Kombinationen sind aus dem Stand der Technik bekannt.

Die US-A-2 948 798 offenbart eine Kombination aus einer Regeneriervorrichtung und einem Speisenbehälter gemäß dem Oberbegriff von Anspruch 1.

Der vorliegenden Erfindung liegt die Aufgabe zugrunde, eine solche Kombination zu schaffen, welche vielseitig einsetzbar ist.

Diese Aufgabe wird durch eine Kombination nach Anspruch 1 gelöst.

Dadurch, dass die erfindungsgemäße Vorrichtung eine integrierte Regeneriereinrichtung zum Erwärmen und/oder Warmhalten von flüssigen Speisen umfasst, ist es möglich, solche flüssigen Speisen, wie beispielsweise Suppen oder Soßen, die in einem Speisenbehälter untergebracht sind, in der Regeneriervorrichtung zu regenerieren und ohne Entnahme oder Wechsel des Speisenbehälters direkt aus der Regeneriervorrichtung an Kunden bzw. Gäste auszugeben und/oder diese flüssigen Speisen zu portionieren.

Zugleich mit der Ausgabe und/oder Portionierung der flüssigen Speisen aus dem in die Regeneriereinrichtung eingebrachten Speisenbehälter können dabei weitere Speisen und/oder Getränke aus dem Kaltfach und/oder aus dem Heißfach der Regeneriervorrichtung ausgegeben und/oder portioniert werden.

Die erfindungsgemäße Regeneriervorrichtung ermöglicht so eine besonders vielseitige und effiziente Regenerierung, Kühlung, Lagerung und Verteilung von Speisen und/oder Getränken direkt am Ort der Speisen- bzw. Getränkeausgabe an den Kunden.

In dieser Beschreibung und in den beigefügten Ansprüchen ist unter einem "Kaltfach" insbesondere auch ein sogenanntes "Heißkaltfach" zu verstehen, welches wahlweise zur Kühlung zu kühlender oder kaltzuhaltender Speisen und/oder Getränke oder zur Erwärmung zu erwärmender oder warmzuhaltender Speisen und/oder Getränke dient.

In dieser Beschreibung und in den beigefügten Ansprüchen ist unter einem "Heißfach" insbesondere auch ein sogenanntes. "Kaltheißfach" zu verstehen, welches wahlweise zur Erwärmung zu erwärmender oder warmzuhaltender Speisen und/oder Getränke oder zur Kühlung zu kühlender oder kaltzuhaltender Speisen und/oder Getränke dient.

Bei einer bevorzugten Ausgestaltung der erfindungsgemäßen Vorrichtung ist vorgesehen, daß die Vorrichtung, vorzugsweise mittels Rollen, fahrbar ist, so daß die gesamte Vorrichtung in einfacher Weise an den gewünschten Ausgabeort verbracht werden kann.

Bei einer bevorzugten Ausgestaltung der Erfindung ist ferner vorgesehen, daß die Regeneriereinrichtung eine Aufnahme zum Einsetzen eines Speisenbehälters umfaßt.

Diese Aufnahme kann insbesondere als eine nach oben offene Wanne ausgebildet sein.

Um die Wanne zuverlässig mit dem Gehäuse der Vorrichtung zu verbinden, kann vorgesehen sein, daß die Wanne an einer Abdeckplatte der Vorrichtung, vorzugsweise durch Verschraubung, Verlötung und/oder Verschweißung, festgelegt ist.

Die Regeneriereinrichtung kann besonders einfach und effizient aus bereits vorhandenen und weitgehend genormten Bauteilen hergestellt werden, wenn vorteilhafterweise vorgesehen ist, daß die Aufnahme als ein Gastronorm-Speisenbehälter mit integrierter Heizvorrichtung ausgebildet ist.

Vorzugsweise ist dabei der Gastronorm-Speisenbehälter, welcher die Aufnahme der Regeneriereinrichtung bildet, so ausgebildet, daß er die für Gastronorm-Behälter gemäß der DIN EN 631-1 in der Fassung vom September 1993 vorgeschriebenen Abmessungen aufweist.

Eine in dieser Weise ausgebildete Aufnahme der Regeneriereinrichtung bietet den Vorteil, daß sie besonders gut dazu geeignet ist, einen anderen Gastronorm-Speisenbehälter, welcher die gemäß der genannten Norm vorgeschriebenen Abmessungen aufweist, aufzunehmen, ohne daß allzu große Toträume zwischen der Innenwand des aufnehmenden Behälters und der Außenwand des aufgenommenen Behälters entstehen.

Zur Gewährleistung eines guten Wärmeübergangs von der Aufnahme der Regeneriereinrichtung zu dem in die Aufnahme eingesetzten Speisenbehälter ist es günstig, wenn die Aufnahme so dimensioniert ist, daß ein in die Aufnahme eingesetzter Speisenbehälter, insbesondere ein Gastronorm-Speisenbehälter, der die für Gastronorm-Behälter gemäß der DIN EN 631-1 in der Fassung vom September 1993 vorgeschriebenen Abmessungen aufweist, mit seiner seitlichen Außenwand zumindest bereichsweise an einer seitlichen Innenwand der Aufnahme anliegt.

Bei einer bevorzugten Ausgestaltung der Erfindung ist vorgesehen, dass die Aufnahme mit einer Heizvorrichtung versehen ist.

Vorzugsweise bildet die Heizvorrichtung zumindest einen Teil eines Bodens der Aufnahme.

Um einen guten Wärmeübergang von der Heizvorrichtung auf den in die Aufnahme eingesetzten Speisenbehälter zu gewährleisten, ist es günstig, wenn die Regeneriereinrichtung so ausgebildet ist, dass ein in die Aufnahme derselben eingesetzter Speisenbehälter, insbesondere Gastronorm-Speisenbehälter, direkt an der Heizvorrichtung anliegt.

Die Heizvorrichtung der Regeneriereinrichtung kann insbesondere als eine elektrische Widerstandsheizvorrichtung ausgebildet sein.

Alternativ oder ergänzend hierzu könnte jedoch auch beispielsweise vorgesehen sein, dass die Heizvorrichtung als eine induktive Heizvorrichtung ausgebildet ist.

Für die Durchführung der Erwärmungs- und Warmhalteprozesse in der Regeneriereinrichtung ist es besonders günstig, dass der Speisenbehälter einen Grundkörper mit mindestens einer Seitenwand, die einen Innenraum des Speisenbehälters begrenzt, und mindestens ein separat von dem Grundkörper hergestelltes Wärmeleitelement umfaßt, das an dem Grundkörper festgelegt ist.

Vorzugsweise bildet das Wärmeleitelement zumindest einen Teil eines den Innenraum des Speisenbehälters nach unten begrenzenden Bodens des Speisenbehälters.

Für eine rasche und möglichst verlustfreie Übertragung von Wärme von einer Heizvorrichtung der Regeneriereinrichtung zu dem in die Regeneriereinrichtung eingebrachten Speisenbehälter ist es günstig, wenn das Wärmeleitelement des Speisenbehälters bei in die Regeneriereinrichtung eingebrachtem Speisenbehälter direkt mit der Heizvorrichtung der Regeneriereinrichtung in Kontakt steht.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer fahrbaren Regenerierstation mit Suppenregeneriereinrichtung;
- Fig. 2: eine schematische Vorderansicht der Regenerierstation aus Fig. 1;
- Fig. 3: eine schematische Seitenansicht der Regenerierstation aus Fig. 2, mit der Blickrichtung in Richtung des Pfeiles 3 in Fig. 2;
- Fig. 4: eine schematische Draufsicht auf die Regenerierstation aus den Fig. 1 bis 3, bei abgenommener Schutzabdeckung;
- Fig. 5: einen schematischen vertikalen Querschnitt durch die Regenerierstation aus Fig. 4, längs der Linie 5-5 in Fig. 4;
- Fig. 6: eine vergrößerte Darstellung des Bereichs I aus Fig. 5, mit einem in die Suppenregeneriereinrichtung eingesetzten Speisenbehälter;
- Fig. 7: eine der Fig. 6 entsprechende Darstellung, wobei der Speisenbehälter aus der Suppenregeneriereinrichtung entnommen worden ist;
- Fig. 8: eine schematische Seitenansicht eines Speisenbehälters mit einem Wärmeleitboden;
- Fig. 9: einen schematischen Schnitt durch den Speisenbehälter aus Fig. 8 in dem in Fig. 8 mit II bezeichneten Bereich; und
- Fig. 10: eine schematische Draufsicht von oben auf den Speisenbehälter mit Wärmeleitboden aus Fig. 8.

Gleiche oder funktional äquivalente Elemente sind in allen Figuren mit denselben Bezugszeichen bezeichnet.

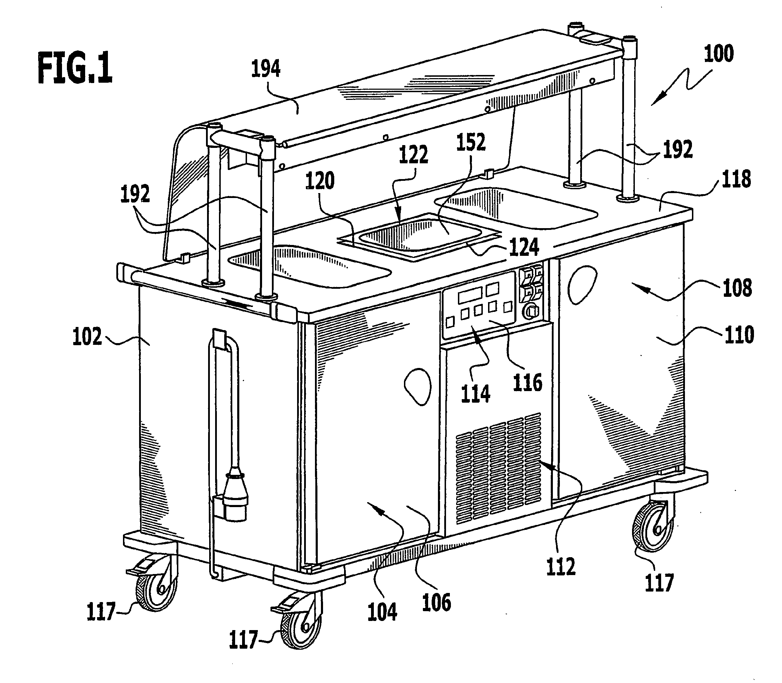

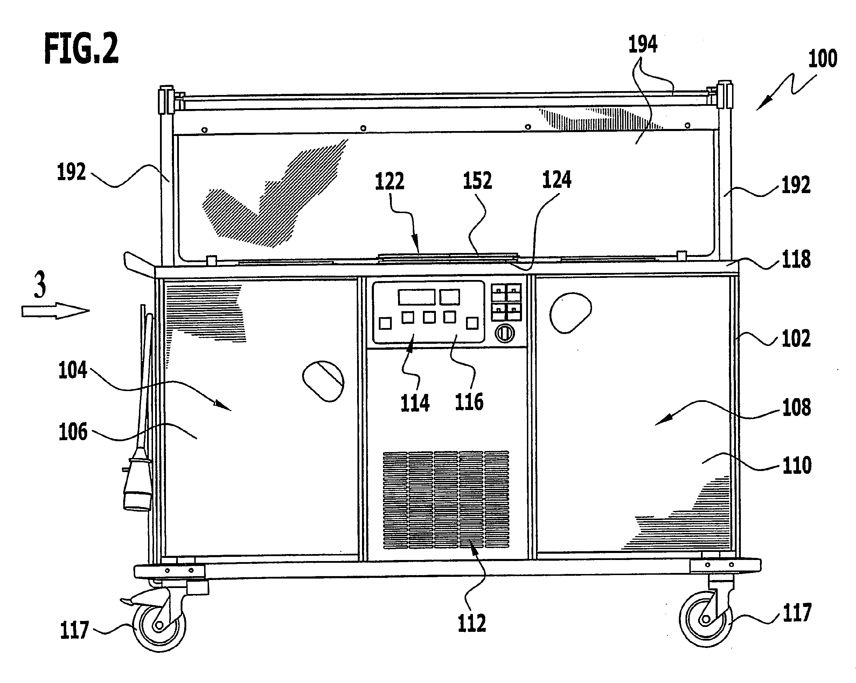

Eine in den Fig. 1 bis 7 dargestellte, als Ganzes mit 100 bezeichnete fahrbare Regenerierstation 100 umfaßt ein im wesentlichen quaderförmiges Gehäuse 102, in welchem ein Heißfach 104 mit einer Zugangstür 106, ein Kaltfach 108 mit einer Zugangstür 110 und zwischen dem Heißfach 104 und dem Kaltfach 108 eine Kühleinheit 112 sowie eine Steuerungseinheit 114 der Regenerierstation 100 mit einem Bedienfeld 116 angeordnet sind.

Die Regenerierstation 100 umfaßt ein (nicht dargestelltes) Gebläse und eine Heizeinrichtung, mittels welchen Luft aus dem Heißfach 104 ansaugbar, erwärmbar und dem Heißfach 104 wieder zuführbar ist, um in dem Heißfach 104 befindliche Speisen und/oder Getränke zu erwärmen bzw. warm zu halten.

Ferner ist das Kaltfach 108 der Regenerierstation 100 mittels der Kühleinheit 112 kühlbar, um in dem Kaltfach 108 befindliche Speisen und/oder Getränke zu kühlen bzw. kalt zu halten.

Die Regenerierstation 100 ist mittels mehrerer, beispielsweise vier, Rollen 117, welche an der Unterseite des Gehäuses 102 um vertikale Achsen schwenkbar gehalten sind, auf einem Untergrund verfahrbar.

Nach oben hin wird das Gehäuse 102 der Regenerierstation 100 durch eine Abdeckplatte 118 abgeschlossen.

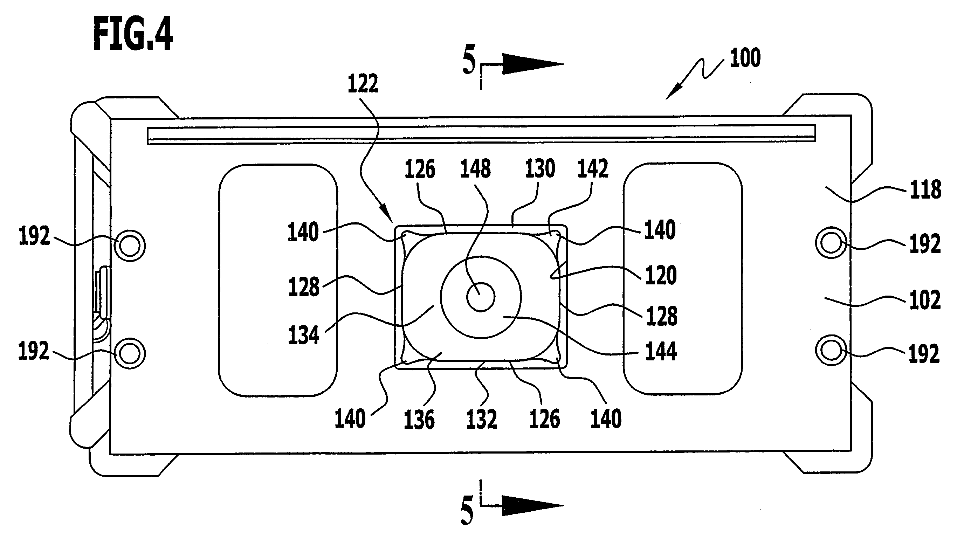

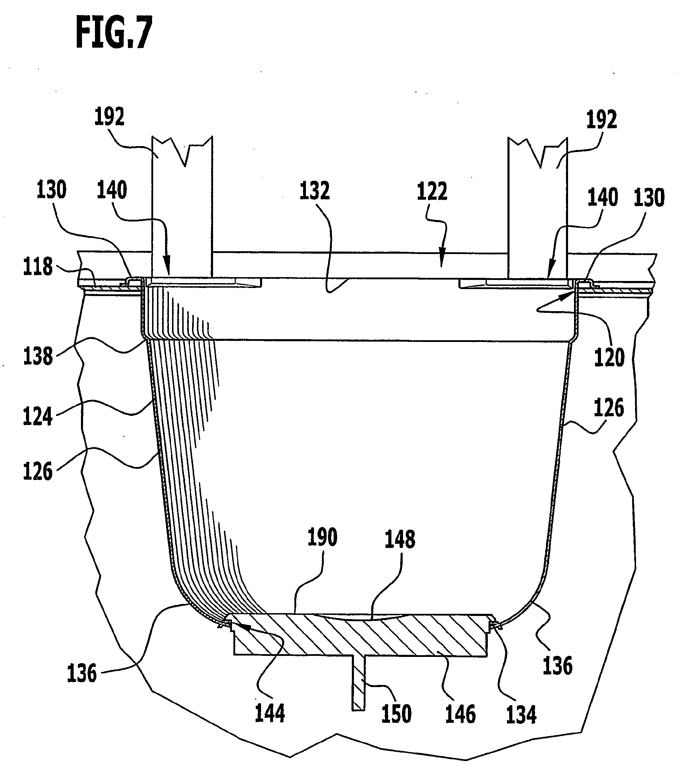

Wie am besten aus den Fig. 4 und 7 zu ersehen ist, ist die Abdeckplatte 118 ungefähr mittig mit einer Durchtrittsöffnung 120 versehen, in welcher eine Suppenregeneriereinrichtung 122 der Regenerierstation 100 angeordnet ist.

Die Suppenregeneriereinrichtung 122 umfaßt eine Wanne 124 in Form eines Gastronorm-Speisenbehälters GN 1/2 - 200 mit zwei langen Seitenwänden 126, zwei kurzen Seitenwänden 128, einem längs des oberen Randes der Seitenwände 126, 128 umlaufenden Randbereich 130, der längs einer Biegelinie 132 an die Seitenwände 126, 128 angrenzt, und einem im wesentlichen horizontalen Bodenbereich 134, der über einen gekrümmten Bereich 136 in die Seitenwände 126, 128 übergeht.

Im oberen Bereich der Seitenwände 126, 128 ist eine umlaufende Stapelschulter 138 ausgebildet.

Wie am besten aus Fig. 4 zu ersehen ist, weist der umlaufende Randbereich 130 der Wanne 124 vier Eckbereiche 140 auf, welche jeweils mit einer Prägung 142 versehen sind, um dem jeweiligen Eckbereich 140 eine hohe Stabilität gegen ein Umknicken oder Verbiegen zu verleihen.

Die genaue Ausbildung dieser Prägungen 142 ist beispielsweise in der DE 102 10 897 A1 beschrieben.

Der Bodenbereich 134 der Wanne 124 ist mit einer im wesentlichen kreisförmigen Bodenöffnung 144 versehen, in welche eine im wesentlichen zylindrische Heizplatte 146, die an ihrer dem Innenraum der Wanne 124 zugewandten Oberseite mit einer mittigen, konkav gewölbten Ausnehmung 148 versehen ist, so eingesetzt ist, daß sie die Bodenöffnung 144 der Wanne 124 vollständig verschließt und an ihren Rändern vom Rand des Bodenbereichs 134 der Wanne 124 getragen wird.

Die Heizplatte 146 ist über rein schematisch dargestellte Versorgungsleitungen 150 mit einer im Gehäuse 102 der Regenerierstation 100 angeordneten (nicht dargestellten) elektrischen Spannungsquelle verbunden.

Der Randbereich 130 der Wanne 124 liegt von oben auf dem die Durchtrittsöffnung 120 umgebenden Rand der Abdeckplatte 118 auf und ist mit derselben verschweißt, um die Wanne 124 dauerhaft an der Abdeckplatte 118 festzulegen.

Die Wanne 124 und die Abdeckplatte 118 sind vorzugsweise aus einem metallischen Material, beispielsweise aus dem Stahl mit der Werkstoffnummer 1.4301, gebildet.

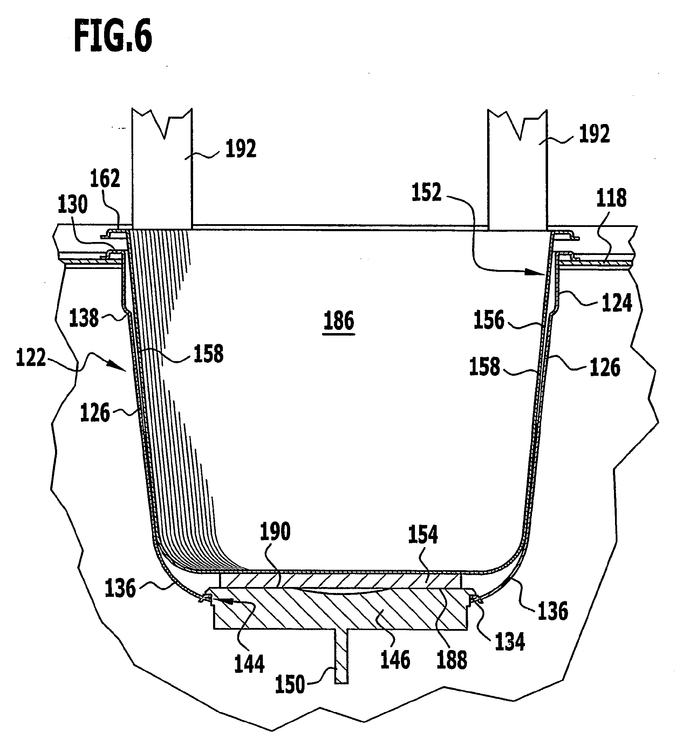

Wie am besten aus Fig. 6 zu ersehen ist, ist in die vorstehend beschriebene Suppenregeneriereinrichtung 122 ein Speisenbehälter 152 einsetzbar, welcher insbesondere die Form eines Gastronorm-Speisenbehälters mit einer am Boden des Speisenbehälters 152 angeordneten Wärmeleitplatte 154 aufweisen kann.

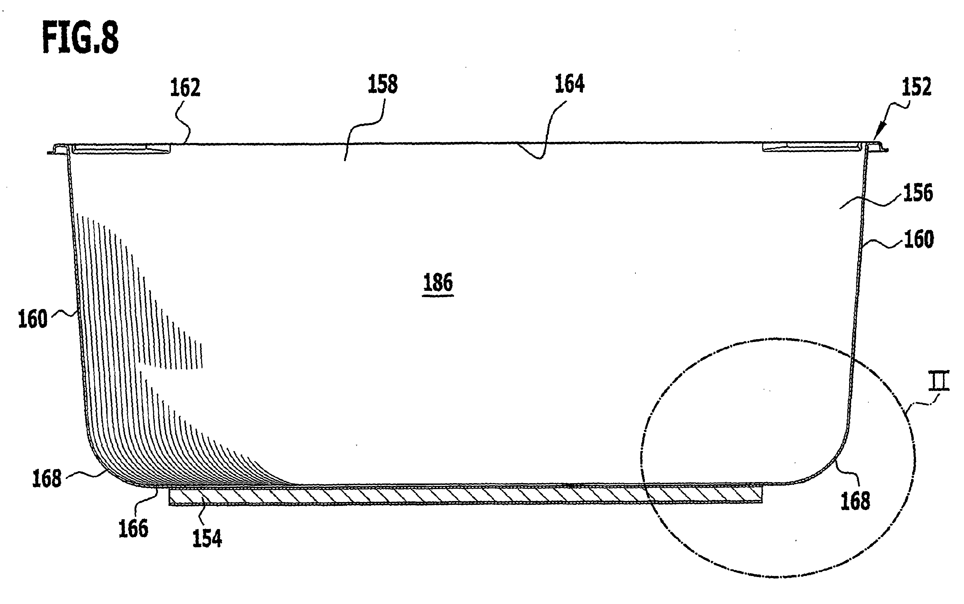

Der in den Fig. 8 bis 10 im einzelnen dargestellte Speisenbehälter 152 umfaßt einen Grundkörper 156 mit zwei langen Seitenwänden 158, zwei kurzen Seitenwänden 160, einem längs des oberen Randes der Seitenwände 158, 160 umlaufenden Randbereich 162, der längs einer Biegelinie 164 an die Seitenwände 158, 160 angrenzt, und einen im wesentlichen horizontalen Bodenbereich 166, der über einen gekrümmten Bereich 168 des Grundkörpers 156 in die Seitenwände 158 bzw. 160 übergeht.

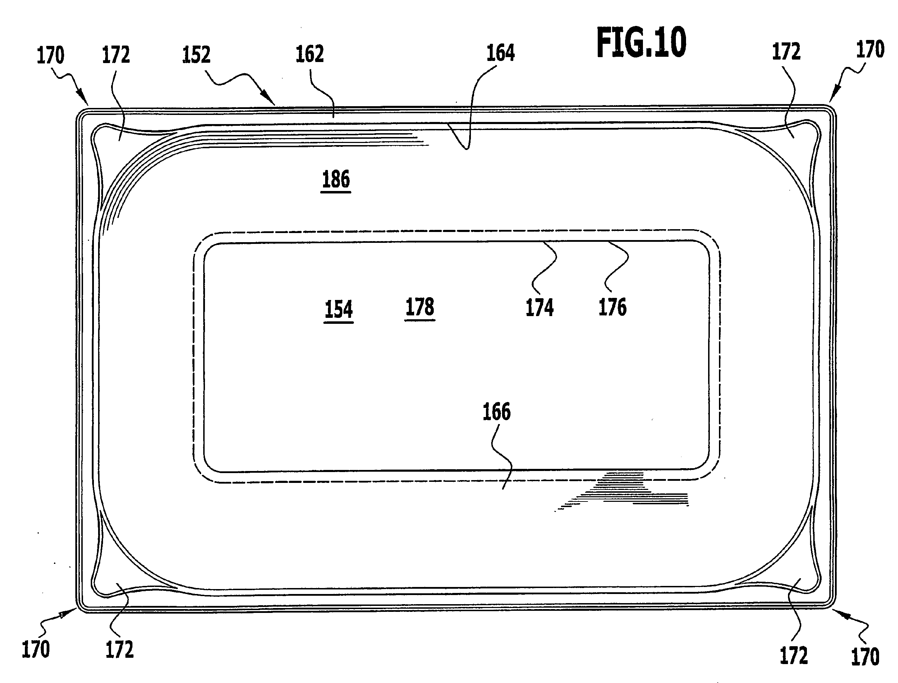

Wie am besten aus Fig. 10 zu ersehen ist, weist der umlaufende Randbereich 162 des Speisenbehälters 152 vier Eckbereiche 170 auf, welche jeweils mit einer Prägung 172 versehen sein können, um dem jeweiligen Eckbereich 170 eine hohe Stabilität gegen ein Umknicken oder Verbiegen zu verleihen.

Die genaue Ausbildung dieser Prägungen 172 ist beispielsweise in der DE 102 10 897 A1 beschrieben.

Der Bodenbereich 166 des Grundkörpers 156 umgibt eine im wesentlichen rechteckige Bodenöffnung 174, die dadurch entstanden ist, daß ein Teil des Bodens des Grundkörpers 156 längs des Randes 176 der Bodenöffnung 174 aus dem Grundkörper 156 herausgetrennt worden ist.

Die Bodenöffnung 174 wird von unten her vollständig durch ein Wärmeleitelement in Form der im wesentlichen quaderförmigen Wärmeleitplatte 154 überdeckt, deren im wesentlichen ebene Oberseite 178 flächig an der Unterseite des die Bodenöffnung 174 umgebenden Bodenbereichs 166 des Grundkörpers 156 anliegt und durch Verschweißung an einer längs des Randes 176 der Bodenöffnung 174 umlaufenden Schweißnaht fest mit dem Grundkörper 156 des Speisenbehälters 152 verbunden ist.

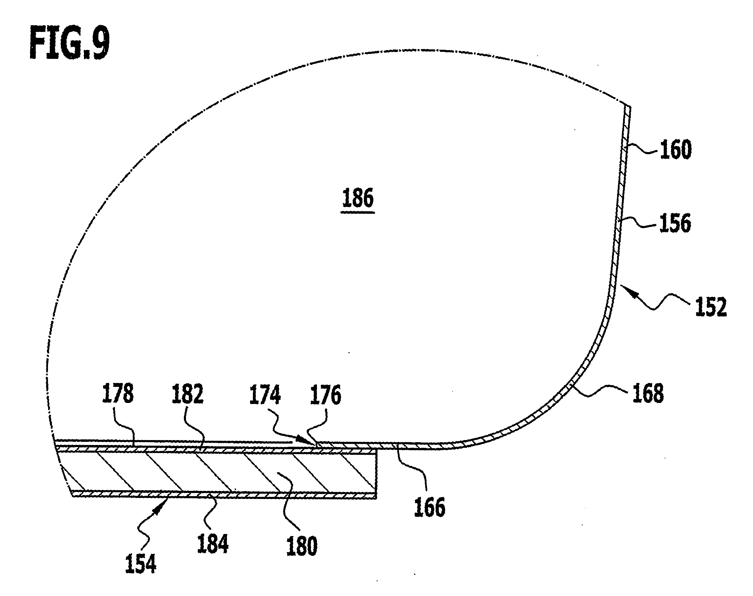

Wie am besten aus Fig. 9 zu ersehen ist, umfaßt die Wärmeleitplatte 154 eine zentrale Platte 180 aus einem gut wärmeleitenden, metallischen Material, beispielsweise aus Aluminium, die an ihrer Oberseite mit einer ersten Auflage oder Beschichtung 182 aus einem metallischen Material, beispielsweise aus einem nicht rostenden Stahl, insbesondere aus dem Stahl mit der Werkstoffnummer 1.4301, und an ihrer Unterseite mit einer zweiten Auflage oder Beschichtung 184 aus einem metallischen Material, insbesondere aus einem nicht rostenden Stahl, vorzugsweise aus dem Stahl mit der Werkstoffnummer 1.4301, versehen ist.

Auch der Grundkörper 156 des Speisenbehälters 152 ist vorzugsweise aus einem metallischen Material, beispielsweise aus einem nicht rostenden Stahl, insbesondere aus dem Stahl mit der Werkstoffnummer 1.4301, gebildet.

Der nicht rostende Chrom-Nickel-Stahl mit der Werkstoffnummer 1.4301 weist die folgende Zusammensetzung auf: 17 bis 19,5 Gewichts-% Cr;
8 bis 10,5 Gewichts-% Ni; höchstens 0,07 Gewichts-% C; höchstens
1,0 Gewichts-% Si; höchstens 2,0 Gewichts-% Mn; höchstens
0,045 Gewichts-% P; höchstens 0,015 Gewichts-% S; höchstens
0,11 Gewichts-% N; Rest Fe.

Die Seitenwände 158, 160 des Grundkörpers 156, der Bodenbereich 166 des Grundkörpers 156 und die Oberseite 178 der Wärmeleitplatte 154 begrenzen gemeinsam den Innenraum 186 des Speisenbehälters 152, welcher ein solches Volumen aufweist, daß er beispielsweise ungefähr 40 Suppenportionen faßt.

Insbesondere grenzt die Oberseite 178 der Wärmeleitplatte 154 in dem Bereich der Bodenöffnung 174 direkt an den Innenraum 186 des Speisenbehälters 152 an, so daß in dem Speisenbehälter 152 aufgenommene flüssige Speisen in direktem Kontakt mit der Wärmeleitplatte 154 stehen und somit direkt von der Wärmeleitplatte 154 Wärme aufnehmen können.

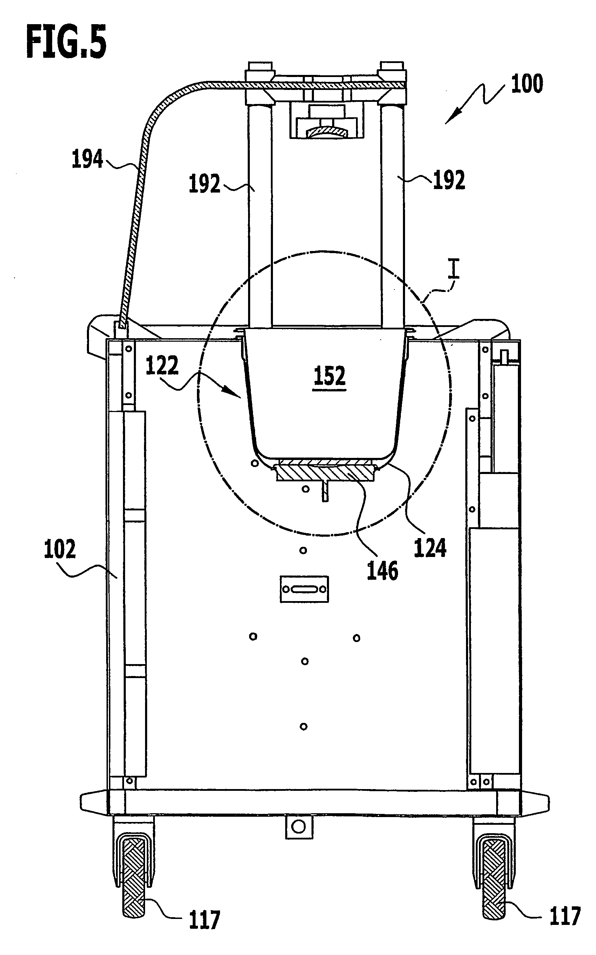

Das Material der Wärmeleitplatte 154 weist eine hohe Wärmeleitfähigkeit auf, so daß eine rasche Zufuhr von Wärme zu in dem Speisenbehälter 152 aufgenommenen flüssigen Speisen durch die Wärmeleitplatte 154 hindurch möglich ist, wenn der Speisenbehälter 152 in die Wanne 124 der Suppenregeneriereinrichtung 122 eingesetzt ist, wie dies in den Fig. 5 und 6 dargestellt ist.

Dabei ist der Speisenbehälter 152 so in die Wanne 124 der Suppenregeneriereinrichtung 122 einsetzbar, daß die Wärmeleitplatte 154 mit ihrer Unterseite 188 flächig an der Oberseite 190 der Heizplatte 146 aufliegt und die Seitenwände 158, 160 des Speisenbehälters 152 zumindest bereichsweise an den Seitenwänden 126, 128 der Wanne 124 anliegen, wodurch ein besonders guter Wärmeübergang von der Heizplatte 146 und der Wanne 124 der Suppenregeneriereinrichtung 122 einerseits auf die Wärmeleitplatte 154 und den Grundkörper 156 des Speisenbehälters 152 andererseits gewährleistet ist.

Die Heizleistung der Heizplatte 146, welche (nicht dargestellte) elektrische Widerstandsheizelemente enthält, kann über das Bedienfeld 116 mittels einer (nicht dargestellten) Regelschaltung so geregelt werden, daß die flüssigen Speisen in dem Speisenbehälter 152, welcher in die Suppenregeneriereinrichtung 122 eingesetzt ist, eine gewünschte Temperatur annehmen.

Die in dem Speisenbehälter 152 befindlichen flüssigen Speisen, beispielsweise Suppen oder Soßen, können somit in der Suppenregeneriereinrichtung 122 der Regenerierstation 100 erwärmt bzw. warm gehalten werden, wobei zugleich die direkte Speisenausgabe und Portionierung aus dem in die Suppenregeneriereinrichtung 122 der Regenerierstation 100 eingesetzten Speisenbehälter 152 heraus möglich ist, ohne daß der Speisenbehälter 152 für die Speisenausgabe aus der Suppenregeneriereinrichtung 122 entnommen werden muß.

Zugleich mit der Ausgabe der flüssigen Speisen aus dem Speisenbehälter 152 können Speisen aus dem Heißfach 104 und/oder Kaltspeisen aus dem Kaltfach 108 ausgegeben werden.

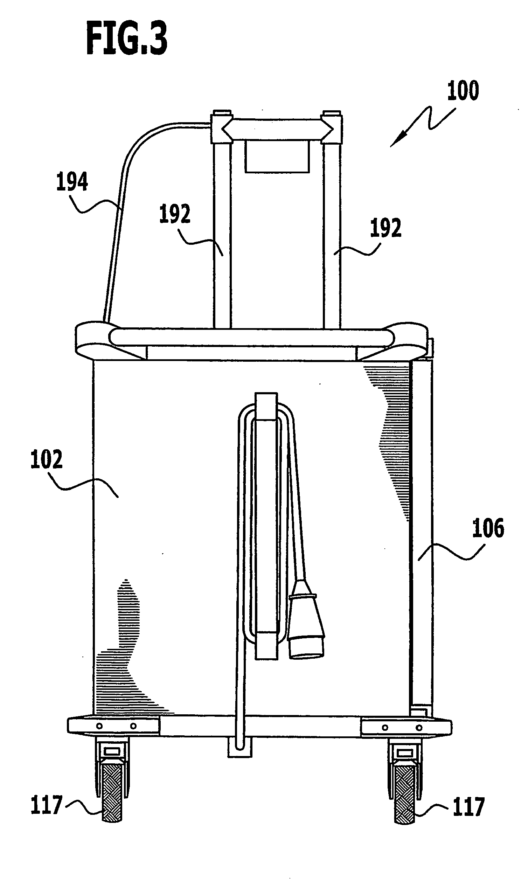

Wie am besten aus den Fig. 1 und 3 zu ersehen ist, ist die Regenerierstation 100 ferner mit von der Oberseite ihres Gehäuses 102 nach oben abstehenden Stützen 192 versehen, die zusammen mit der Abdeckplatte 118 eine winkelförmige Schutzabdeckung 194 tragen, welche die Oberseite des Gehäuses 102 der Regenerierstation 100 und somit insbesondere die Suppenregeneriereinrichtung 122 zu der dem Bedienfeld 116 abgewandten Rückseite der Regenerierstation 100 hin abschirmt, so daß die Schutzabdeckung 194 insbesondere als sogenannter "Hustenschutz" dienen kann.

## Patentansprüche

1. Kombination aus einer Vorrichtung zum Erwärmen, Warmhalten, Kühlen und/oder Kalthalten von Speisen und/oder Getränken, umfassend mindestens ein Kaltfach (108) und/oder mindestens ein Heißfach (104), wobei die Vorrichtung (100) mindestens eine Regeneriereinrichtung (122) zum Erwärmen und/oder Warmhalten von flüssigen Speisen, wie beispielsweise Suppen oder Soßen, umfasst,
und einem in die Regeneriereinrichtung (122) der Vorrichtung (100) einbringbaren Speisenbehälter (152),
**dadurch gekennzeichnet,**
**dass** der Speisenbehälter (152) einen Grundkörper (156) mit mindestens einer Seitenwand (158), die einen Innenraum (186) des Speisenbehälters (152) begrenzt, und mindestens ein separat von dem Grundkörper (156) hergestelltes Wärmeleitelement (154) umfasst, das an dem Grundkörper (156) festgelegt ist.

2. Kombination nach Anspruch 1, **dadurch gekennzeichnet, dass** die Vorrichtung, vorzugsweise mittels Rollen (117), fahrbar ist.

3. Kombination nach einem der Ansprüche 1 oder 2, **dadurch gekennzeichnet, dass** die Regeneriereinrichtung (122) eine Aufnahme (124) zum Einsetzen eines Speisenbehälters (152) umfasst.

4. Kombination nach Anspruch 3, **dadurch gekennzeichnet, dass** die Aufnahme (124) als eine nach oben offene Wanne ausgebildet ist.

5. Kombination nach Anspruch 4, **dadurch gekennzeichnet, dass** die Wanne an einer Abdeckplatte (118) der Vorrichtung (100), vorzugsweise durch Verschraubung, Verlötung und/oder Verschweißung, festgelegt ist.

6. Kombination nach einem der Ansprüche 4 oder 5, **dadurch gekennzeichnet, dass** die Aufnahme (124) als ein Gastronorm-Speisenbehälter mit integrierter Heizvorrichtung (146) ausgebildet ist.

7. Kombination nach einem der Ansprüche 3 bis 6, **dadurch gekennzeichnet, dass** die Aufnahme (124) so dimensioniert ist, dass ein in die Aufnahme (124) eingesetzter Speisenbehälter (152) mit seiner seitlichen Außenwand zumindest bereichsweise an einer seitlichen Innenwand der Aufnahme (124) anliegt.

8. Kombination nach einem der Ansprüche 3 bis 7, **dadurch gekennzeichnet, dass** die Aufnahme (124) mit einer Heizvorrichtung (146) versehen ist.

9. Kombination nach Anspruch 8, **dadurch gekennzeichnet, dass** die Heizvorrichtung (146) zumindest einen Teil eines Bodens der Aufnahme (124) bildet.

10. Kombination nach einem der Ansprüche 8 oder 9, **dadurch gekennzeichnet, dass** die Regeneriereinrichtung (122) so ausgebildet ist, dass ein in die Aufnahme (124) eingesetzter Speisenbehälter (152) direkt an der Heizvorrichtung (146) anliegt.

11. Kombination nach einem der Ansprüche 8 bis 10, **dadurch gekennzeichnet, dass** die Heizvorrichtung (146) als eine elektrische Widerstandsheizvorrichtung oder als eine induktive Heizvorrichtung ausgebildet ist.

12. Kombination nach einem der Ansprüche 1 bis 11, **dadurch gekennzeichnet, dass** das Wärmeleitelement (154) zumindest einen Teil eines den Innenraum (186) des Speisenbehälters (152) nach unten begrenzenden Bodens bildet.

13. Kombination nach einem der Ansprüche 1 bis 12, **dadurch gekennzeichnet, dass** die Regeneriereinrichtung (122) eine Heizvorrichtung (146) umfasst und das Wärmeleitelement (154) des Speisenbehälters (152) bei in die Regeneriereinrichtung (122) eingebrachtem Speisenbehälter (152) direkt mit der Heizvorrichtung (146) in Kontakt steht.

## Claims

1. Combination of a device for heating, keeping hot, cooling and/or keeping cold food and/or drinks, comprising at least one cold compartment (108) and/or at least one hot compartment (104), wherein the device (100) comprises at least one regenerating device (122) for heating and/or keeping hot liquid food, such as, for example, soups or sauces,
and a food container (152) which can be introduced into the regenerating device (122) of the device (100),
**characterised in**
**that** the food container (152) comprises a base body (156) with at least one side wall (158) which bounds an interior space (186) of the food container (152), and at least one heat conducting element (154) which is produced separately from the base body (156) and is fixed to the base body (156).

2. Combination according to Claim 1, **characterised in that** the device is movable, preferably by means of rollers (117).

3. Combination according to either of Claims 1 and 2, **characterised in that** the regenerating device (122) comprises a receptacle (124) for inserting a food container (152).

4. Combination according to Claim 3, **characterised in that** the receptacle (124) is formed as a tray which is open upwards.

5. Combination according to Claim 4, **characterised in that** the tray is fixed to a cover plate (118) of the device (100), preferably by screwing, soldering and/or welding.

6. Combination according to either of Claims 4 and 5, **characterised in that** the receptacle (124) is formed as a gastronorm food container with an integrated heating device (146).

7. Combination according to any one of Claims 3 to 6, **characterised in that** the receptacle (124) is dimensioned so that a food container (152) inserted in the receptacle (124) abuts with its lateral outer wall against a lateral inner wall of the receptacle (124), at least in regions.

8. Combination according to any one of Claims 3 to 7, **characterised in that** the receptacle (124) is provided with a heating device (146).

9. Combination according to Claim 8, **characterised in that** the heating device (146) forms at least a part of a bottom of the receptacle (124).

10. Combination according to either of Claims 8 and 9, **characterised in that** the regenerating device (122) is formed so that a food container (152) inserted in the receptacle (124) abuts directly against the heating device (146).

11. Combination according to any one of Claims 8 to 10, **characterised in that** the heating device (146) is formed as an electrical resistance heating device or as an inductive heating device.

12. Combination according to any one of Claims 1 to 11, **characterised in that** the heat conducting element (154) forms at least a part of a bottom which bounds the interior space (186) of the food container (152) in the downward direction.

13. Combination according to any one of Claims 1 to 12, **characterised in that** the regenerating device (122) comprises a heating device (146), and the heat conducting element (154) of the food container (152) is directly in contact with the heating device (146) when the food container (152) is introduced into the regenerating device (122).

## Revendications

1. Combinaison d'un dispositif pour réchauffer, tenir au chaud, refroidir et/ou tenir au frais des aliments et/ou des boissons, comprenant au moins un compartiment froid (108) et/ou au moins un compartiment chaud (104), le dispositif comprenant au moins une installation de régénération (122) pour réchauffer et/ou tenir au chaud des aliments liquides, comme par exemple des potages ou des sauces, et un récipient pour aliments (152) qui peut être introduit dans l'installation de régénération (122) du dispositif (100),
**caractérisée en ce que**
le récipient pour aliments (152) comprend un corps de base (156) avec au moins une paroi latérale (158) qui limite un espace intérieur (186) du récipient pour aliments (152) et au moins un élément conducteur de chaleur (154) réalisé séparément du corps de base (156) qui est fixé sur le corps de base (156).

2. Combinaison suivant la revendication 1, **caractérisée en ce que** le dispositif est mobile, de préférence au moyen de roulettes (117).

3. Combinaison suivant l'une des revendications 1 ou 2, **caractérisée en ce que** l'installation de régénération (122) comporte un logement (124) pour l'insertion d'un récipient pour aliments (152).

4. Combinaison suivant la revendication 3, **caractérisée en ce que** le logement (124) a la forme d'une cuvette ouverte vers le haut.

5. Combinaison suivant la revendication 4, **caractérisée en ce que** la cuvette est fixée sur une plaque de couverture (118) du dispositif (100), de préférence par vissage, brasage et/ou soudage.

6. Combinaison suivant l'une des revendications 4 ou 5, **caractérisée en ce que** le logement (124) a la forme d'un récipient pour aliments gastronorme avec dispositif de chauffage intégré (146).

7. Combinaison suivant l'une des revendications 3 à 6, **caractérisée en ce que** le logement (124) est dimensionné de manière telle que le récipient pour aliments (152) inséré dans le logement (124) est attenant par sa paroi extérieure latérale au moins de manière sectorielle à une paroi intérieure latérale du logement (124).

8. Combinaison suivant l'une des revendications 3 à 7, **caractérisée en ce que** le logement (124) est doté d'un dispositif de chauffage (146).

9. Combinaison suivant la revendication 8, **caractérisée en ce que** le dispositif de chauffage (146) forme au moins une partie d'un fond du logement (124).

10. Combinaison suivant l'une des revendications 8 ou 9, **caractérisée en ce que** l'installation de régénération (122) est formée de manière telle qu'un récipient pour aliments (152) inséré dans le logement (124) est placé directement contre le dispositif de chauffage (146).

11. Combinaison suivant l'une des revendications 8 à 10, **caractérisée en ce que** le dispositif de chauffage (146) a la forme d'un dispositif de chauffage à résistance électrique ou d'un dispositif de chauffage inductif.

12. Combinaison suivant l'une des revendications 1 à 11, **caractérisée en ce que** l'élément conducteur de chaleur (154) forme au moins une partie d'un fond limitant l'espace intérieur (186) du récipient pour aliments (152) vers le bas.

13. Combinaison suivant l'une des revendications 1 à 12, **caractérisée en ce que** l'installation de régénération (122) comprend un dispositif de chauffage (146) et l'élément conducteur de chaleur (154) du récipient pour aliments (152) est en contact directement avec le dispositif de chauffage (146) lorsque le récipient pour aliments (152) est introduit dans l'installation de régénération (122).
